# EUROPEAN PATENT APPLICATION

(11) **EP 1 598 686 A2**
(43) Date of publication of application: **23.11.2005**
(21) Application number: 05008069.6
(22) Date of filing: 13.04.2005
(51) Int. Cl.: G02B 6/42, G02B 6/44

(54) **RF absorbing strain relief bushing**

(30) Priority: 17.05.2004 US 571841 P
(71) Applicant: JDS Uniphase Corporation, San Jose, CA 95131 (US)
(72) Inventor: O'Brien, Michael K., Melbourne, Florida 32901 (US)
(74) Representative: Banzer, Hans-Jörg

(57) **Abstract**

The invention relates to a resilient, non-conductive, RF absorptive, strain-relief bushing (21) mounted on an electro-optical module (1) for limiting the amount of electro-magnetic interference emanating from the housing (2) of the electro-optical module (1). The electro-optical module (1) includes an optical sub-assembly (3) for converting electrical signals into optical signals or vice versa, and an input/output port (10) for transmitting the optical signal to the optical sub-assembly (3) via an optical fiber (12). The bushing (21) is in the form of a collar (21), which surrounds the input/output port (10) of the electro-optical module (1), or a boot, which extends from one end of the input/output port (10) down a portion of the length of the optical fiber (12).

## Description

### TECHNICAL FIELD

The present invention relates to a bushing for an electro-optical module, and in particular to a resilient, non-conductive, radio frequency (RF) absorbing bushing for reducing electromagnetic interference (EMI) emissions from within the module, while providing strain relief for an optical fiber and/or a feed-through tube extending from the module.

### BACKGROUND OF THE INVENTION

Conventional EMI shields found on electro-optical modules, e.g. transmitter optical sub-assemblies (TOSA) and receiver optical sub-assemblies (ROSA), consist of a piece of sheet metal cut or bent into shape and placed in the front or rear of the electro-optical module. Examples of conventional EMI shielding for transceivers are disclosed in United States Patents Nos. 6,200,041 issued March 13, 2001 in the name of Gaio et al; 6,335,869 issued January 1, 2002 to Branch et al; 6,659,655 issued December 9, 2003 to Dair et al; and 6,817,782 issued November 16, 2004 to Togami et al. All of the aforementioned EMI shields consist of a solid conductive material for electrically interconnecting the electro-optic component, e.g. laser or photo-detector, to the module housing, which is then grounded to a host device. Accordingly, existing EMI shields require small, accurately made and assembled structures, which add to the base and assembly cost of the module.

An object of the present invention is to overcome the shortcomings of the prior art by providing a resilient, non-conductive and RF absorbing shield that isolates the optical component from the module housing, while reducing EMI emissions and providing mechanical support and strain relief for portions of the components extending from the housing.

### SUMMARY OF THE INVENTION

According to the present invention, this object is achieved by an electro-optical device according to claim 1. The dependent claims define preferred and advantageous embodiments of the invention.

Accordingly, the present invention relates to an electro-optical device comprising:
an electro-optical component for converting between electrical and optical signals;
a housing for supporting the electro-optic component having an input/output port for supporting an optical fiber, which transmits optical signals to or from the electro-optical component; and
a resilient, non-conductive, RF absorbing collar mounted in close proximity to the input/output port, thereby reducing EMI emissions from the housing, and thereby providing mechanical support to the input/output port.

### BRIEF DESCRIPTION OF THE DRAWINGS

The invention will be described in greater detail with reference to the accompanying drawings which represent preferred embodiments thereof, wherein:
Figure 1 is a cross-sectional view of an embodiment of the present invention mounted on an electro-optical module housing;
Figure 2 is an isometric view of an embodiment of Fig. 1;
Figure 3 is an isometric view of the invention of Figs 1 and 2;
Figure 4 is an isometric view of an alternative embodiment of the present invention mounted on an electro-optical module housing;
Figure 5 is an isometric view of the embodiment of Fig. 4 out of position on the electro-optical module housing; and
Figure 6 is an isometric view of an alternative embodiment of the present invention mounted on an electro-optical module housing.

### DETAILED DESCRIPTION

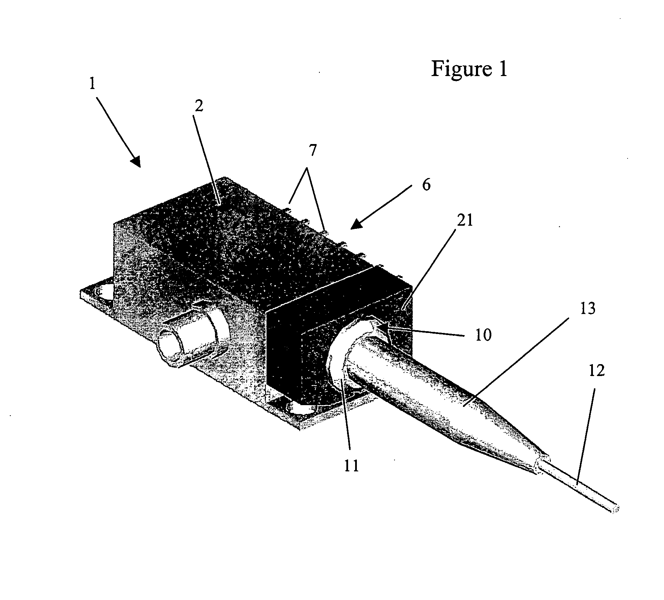

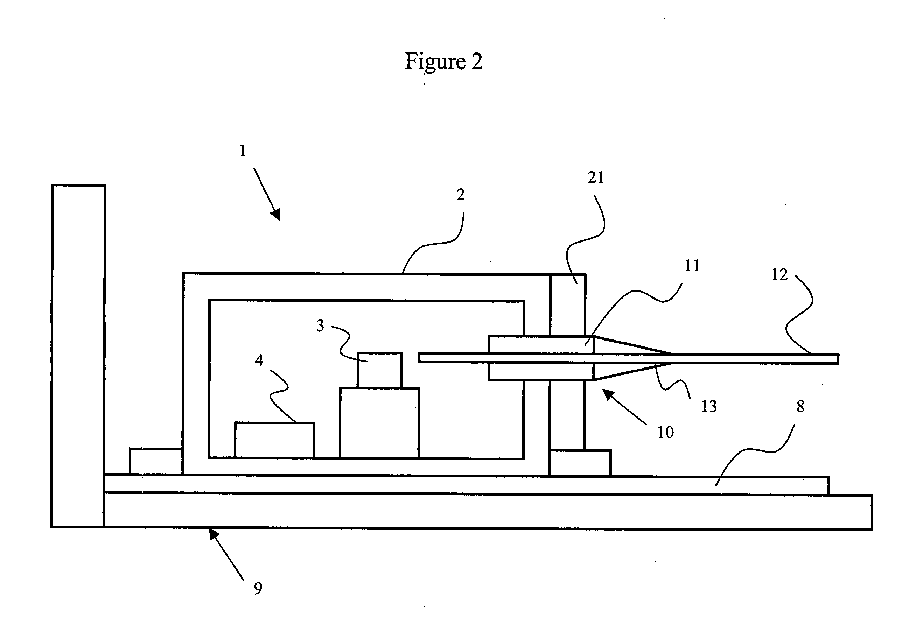

With reference to Figures 1 and 2, an electro-optical module, generally indicated at 1, includes a housing 2 enclosing an electro-optical component 3, e.g. a laser or a photo-detector, along with any electrical circuitry 4 for controlling and monitoring the electro-optical component 3, typically provided on a module printed circuit board (PCB). An electrical connector 6 extends from the side of the housing 1 for electrically connecting the control and monitoring circuitry to a host device, within which the electro-optical module 1 is mounted. The illustrated electrical connector 6 comprise pins 7, which are soldered directly to a host printed circuit board (PCB) 8 in the host device 9. Alternatively, the electrical connector 6 can be a card edge connector formed in an end of the module PCB, or any other pluggable electrical connector, for plugging into a corresponding electrical connector on the host PCB.

An input/output (I/O) port 10 extends through a wall of the housing 2 enabling light to travel between the electro-optical component 3 and an optical fiber 12, which can be provided with a conventional strain relief boot 13. The I/O port 10 can take many forms depending on the structure of the electro-optical component 3 and the housing 1. The I/O port 10 could be a feed-through tube 11 enabling the optical fiber 12 to extend therethough into the housing 1 into close proximity to the electro-optical component 3 (as in Figs. 1 and 2) or the I/O port 10 could be an optical coupler for receiving an end of an optical fiber encased in an optical fiber ferrule.

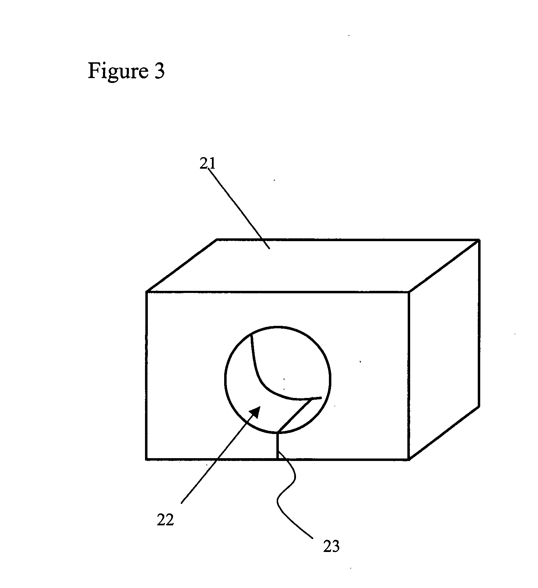

RF energy radiates within the housing 2 and is received by the body of the electro-optical component 3, i.e. much like an antenna. The RF energy is then conducted through the wall of the housing 2 via the I/O port 10. Moreover, the intersection of two elements, e.g. the feed-through tube 11 and the housing 2 or the feed-through tube 11 and the optical fiber 12, forms gaps, which create a transfer point for any mechanical forces applied to one of the elements. In order to prevent the RF energy from being re-radiated outside of the housing 2, a bushing collar 21 is mounted on the housing 2 using a suitable adhesive or other suitable means in close proximity to the gaps in the I/O port 10, e.g. surrounding (or at least partially surrounding) the feed-through tube 11 covering the gaps with the optical fiber 12 and/or the housing 2. With reference to Figure 3, preferably the collar 21 is rectangular in shape, matching the shape of the housing 2, with a cylindrical hole 22 extending therethrough having a diameter slightly less than that of the feed-through tube 11 providing a tight fit therebetween. To facilitate assembly, a slit 23 is provided in one side of the collar 21 enabling the collar 21 to be temporarily bent to fit around the feed-through tube 11. The collar 21 is made of a sufficient mass of a resilient, RF absorptive, non-conductive material, e.g. nitriles, silicones, and polyeurethanes as bases, loaded with various magnetically-loaded products such as ferrous materials, carbons, and high-performance dialectrics. Preferably, the collar 21 is made of a magnetically loaded silicone rubber, which is RF absorptive over the frequency range of 800 MHz to 18 Ghz, such as a material sold under the trade name Eccosorb™. In addition to minimizing any EMI emissions from the housing 1, the collar 21 provides mechanical support and strain relief for the feed-through tube 11. Moreover, the resiliency of the collar 21 ensures a consistent seal between the housing 1 and the feed-through tube 11 during any shock, vibration or thermal expansion. However, the collar 21 does not require the precise control over position and compression required by traditional EMI gaskets.

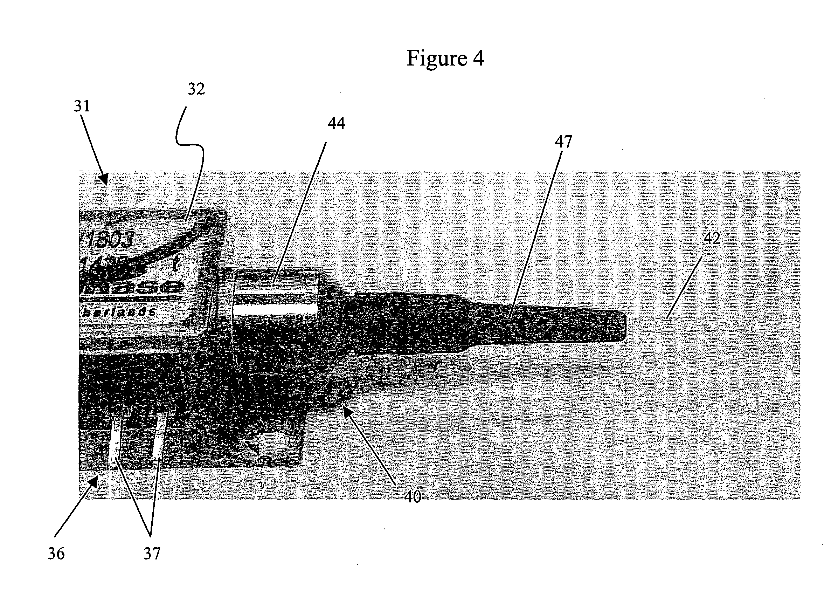

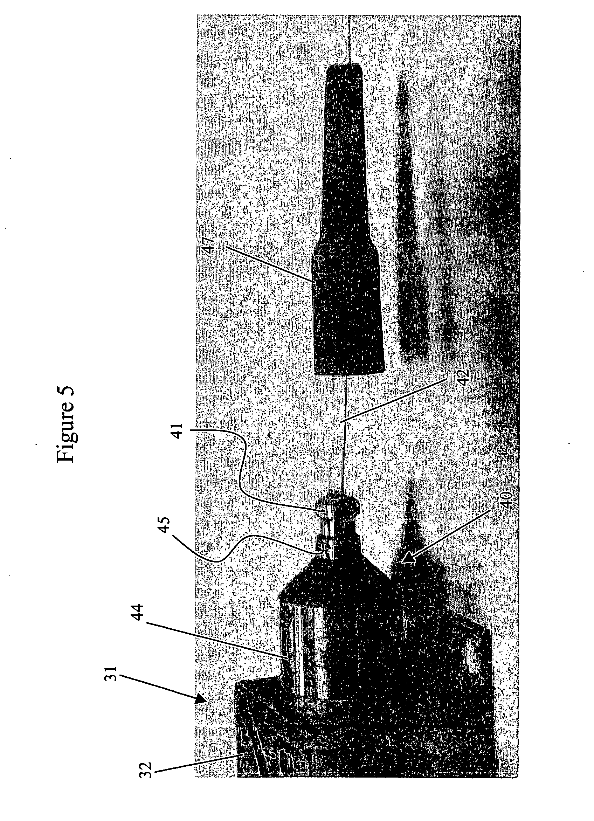

With reference to Figures 4 and 5, an alternative embodiment of an optical module 31 according the present invention includes a housing 32 with an electrical connecting 36 comprising pins 37 extending therefrom. An I/O port 40 includes a feed-through tube 41, which receives an optical fiber 42 extending therethrough. The I/O port 40 includes a cylindrical snout 44, which tapers to a small cylindrical opening 45 for receiving the feed-through tube 41. An alternative bushing collar, according to the present invention, in the form of a strain relief boot 47 is positioned around the optical fiber 42 over top of an end of the feed-through tube 41 and the cylindrical opening 45. Like the collar 21, the strain relief boot 47 is made of a sufficient mass of a resilient, RF absorptive, non-conductive material, e.g. nitriles, silicones, and polyeurethanes as bases, loaded with various magnetically-loaded products such as ferrous materials, carbons, and high-performance dialectrics. Preferably, the strain relief boot 47 is a magnetically loaded silicone rubber, which is RF absorptive over the frequency range of 800 MHz to 18 Ghz, e.g. a material sold under the trade name Eccosorb™. In addition to minimizing any EMI emissions from the housing 31 and isolating the feed-through tube 41 from the housing 32, the strain relief boot 47 provides mechanical support and strain relief for the feed-through tube 41 and the optical fiber 42. Moreover, the resiliency of the strain relief boot 47 ensures a consistent seal between the housing 31 and the feed-through tube 41 and between the feed-through tube 41 and the optical fiber 42 during any shock, vibration or thermal expansion. Ideally the strain relief boot 47 is solid and slid over the optical fiber 47 during manufacture, but alternatively can initially be formed with a slit for enabling the strain relief boot 47 to be wrapped around the optical fiber 47 after the optical module 31 is assembled.

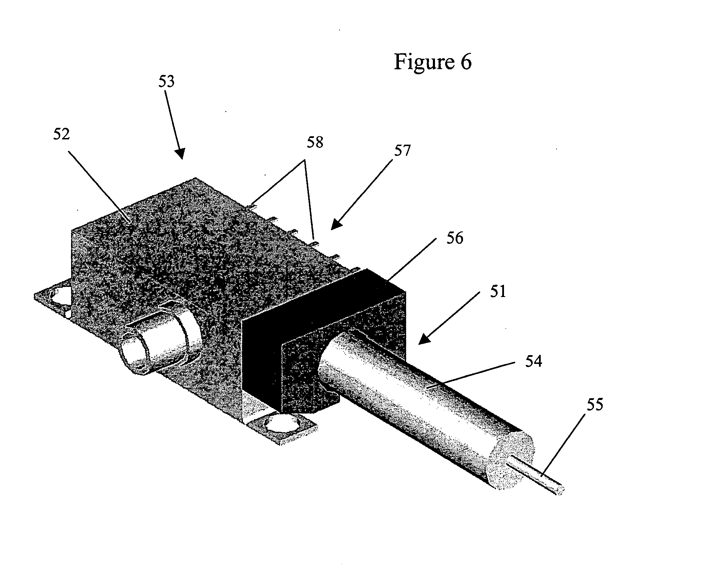

With reference to Figure 6, a one-piece collar/boot 51 can be sized to fit over the entire feed-through tube (not shown) into contact with the housing 52 of an optical module 53. The one-piece collar/boot 51 includes a strain relief boot portion 54, which covers the gap between the feed-through tube and an optical fiber 55, thereby providing mechanical support and strain relief for optical fiber 55, and a feed-through tube collar portion 56, which covers the gap between the feed-through tube and the housing 52, thereby providing mechanical support and strain relief for the feed-through tube and electrically isolating the feed-through tube from the housing 52. As above, the one-piece collar/boot 51 is made of a sufficient mass of a resilient, RF absorptive, non-conductive material, e.g. nitriles, silicones, and polyeurethanes as bases, loaded with various magnetically-loaded products such as ferrous materials, carbons, and high-performance dialectrics. Preferably, the collar/boot 51 is made from a magnetically loaded silicone rubber, which is RF absorptive over the frequency range of 800 MHz to 18 Ghz, e.g. a material sold under the trade name Eccosorb™. As above, the optical module 53 has an electrical connector 57 in the form of pins 58 for electrically connecting an electro-optical component to a host device.

## Claims

1. An electro-optical device comprising:
an electro-optical component (3) for converting between electrical and optical signals;
a housing (2; 32; 52) for supporting the electro-optical component (3) having an input/output port (10; 40) for supporting an optical fiber (12; 42; 55), which transmits optical signals to or from the electro-optical component (3); and
a resilient, non-conductive, RF absorbing collar (21; 47; 51) mounted in close proximity to the input/output port (10; 40), thereby reducing EMI emissions from the housing (2; 32; 52), and thereby providing mechanical support to the input/output port (10; 40).

2. The device according to claim 1, wherein the input/output port (10; 40) includes a feed-through (11; 41) extending through the housing (2; 32; 52) forming a first gap therebetween; and wherein an optical fiber (12; 42; 55) extends through the feed-through (11; 41) forming a second gap therebetween.

3. The device according to claim 2, wherein the collar (21; 47; 51) at least partially surrounds the feed-through (11; 41) substantially covering the first gap for electrically isolating the feed-through (11; 41) from the housing (2; 32; 52) and for providing mechanical support and strain relief between the feed-through (11; 41) and the housing (2; 32; 52).

4. The device according to claim 2 or claim 3, wherein the collar (21; 47; 51) includes a hole (22) for receiving the feed-through (11; 41), and a slit (23) from an outer wall to the hole (22) for facilitating the mounting of the collar (21; 47; 51) around the feed-through (11; 41).

5. The device according to any one of claims 2-4, wherein the collar (21; 47; 51) at least partially surrounds the feed-through (11; 41) substantially covering the second gap providing mechanical support and strain relief between the feed-through (11; 41) and the optical fiber (12; 42; 55).

6. The device according to any one of claims 1-5, wherein the collar (47; 51) forms a boot (47; 54), which extends part way down the optical fiber (42; 55) providing strain relief therefore.

7. The device according to any one of claims 1-6, wherein the collar (21; 51) is mounted on the housing (2; 52) surrounding the feed-through (11) and covering the first gap.

8. The device according to any one of claims 1-7, wherein the collar (21; 47; 51) comprises a base selected from the group consisting of a nitrile, a silicone, and a polyurethane, loaded with magnetically-loaded products selected from the group consisting of ferrous materials, carbons, and high-performance dielectrics.

9. The device according to any one of claims 1-8, wherein the collar (21; 47; 51) comprises a magnetically loaded silicone rubber, which is RF absorptive over the frequency range of 800 Mhz to 18 Ghz.
